(19) Europäisches Patentamt
European Patent Office
Office européen des brevets

(11) **EP 2 647 963 B1**

(12) **EUROPÄISCHE PATENTSCHRIFT**

(45) Veröffentlichungstag und Bekanntmachung des Hinweises auf die Patenterteilung:
**09.11.2016 Patentblatt 2016/45**

(51) Int Cl.:
**G01D 5/245** (2006.01)

(21) Anmeldenummer: **13155072.5**

(22) Anmeldetag: **13.02.2013**

(54) **Verfahren zur Herstellung einer Maßverkörperung und eine Maßverkörperung**

Method for manufacturing a dimensional scale and a dimensional scale

Procédé de fabrication d'un étalon de mesure et étalon de mesure

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.04.2012 DE 102012205402**

(43) Veröffentlichungstag der Anmeldung:
**09.10.2013 Patentblatt 2013/41**

(73) Patentinhaber: **Dr. Johannes Heidenhain GmbH
83301 Traunreut (DE)**

(72) Erfinder:
• **Dormann, Jens
83365 Nußdorf/Sondermoning (DE)**
• **Haible, Pascal
83308 Trostberg (DE)**

(56) Entgegenhaltungen:
**EP-A1- 1 205 735     EP-A1- 1 207 537
EP-A2- 1 452 871     US-A1- 2008 297 143**

## Beschreibung

Die Erfindung betrifft ein Verfahren zur Herstellung einer Maßverkörperung gemäß dem Anspruch 1, sowie eine Maßverkörperung gemäß dem Anspruch 8. Die betreffenden Maßverkörperungen sind insbesondere in Winkelmesssystemen aber auch in Längenmesssystemen einsetzbar.

Entsprechende Winkelmesssysteme dienen zur Messung von Drehbewegungen bzw. Drehstellungen eines Maschinenteils, etwa einer Welle, an der dann eine Maßverkörperung drehfest fixiert ist. Die Winkelskalierung kann beispielsweise eine magnetische Teilung aufweisen, die entsprechend abgetastet werden kann. Dabei wird die Drehbewegung entweder inkremental oder absolut erfasst, der ausgegebene Messwert ist z. B. eine Folge von Zählimpulsen, ein Zählerwert oder ein Codewort. Entsprechende Winkelmesssysteme werden insbesondere in Werkzeugmaschinen an schnell laufenden Spindeln verwendet. Um hochwertige Werkstückoberflächen z.B. durch spanabhebende Werkzeugmaschinen zu erreichen, werden derartige Spindeln immer häufiger mit hohen Drehzahlen beispielsweise bis zu über 40000 Umdrehungen pro Minute betrieben. Entsprechend groß ist die mechanische Belastung von rotierenden Teilen, die an einer derartigen Spindel montiert sind. Insbesondere sind die in der Regel ringförmigen Maßverkörperungen, drehfest mit den Spindeln verbunden, so dass diese enormen Zentrifugalkräften ausgesetzt sind. Es ist ein permanentes Ziel Maßverkörperung zu konstruieren, welche den Belastungen auf Grund hoher Drehzahlen standhalten, und welche insbesondere unter diesen Belastungen die erforderliche Dauerfestigkeit aufweisen. Diese Anforderungen resultieren nicht zuletzt aus sicherheitstechnischen Überlegungen.

Weiterhin kann die Erfindung auch bei linearen Messsystemen angewendet werden. Als Maßverkörperung kann in diesem Fall ein Maßstab oder ein zylindrischer, insbesondere hohlzylindrischer Körper dienen, welcher eine magnetische Teilung aufweist. Die lineare Bewegung wird auch hier entweder inkremental oder absolut erfasst. In bestimmten Anwendungen sind besonders leichte und / oder mechanisch steife Maßverkörperungen für lineare Messsysteme gefordert.

Insbesondere bei Maßverkörperungen für lineare Messsysteme, aber auch bei Maßverkörperungen für Winkelmesssysteme, ist es im Hinblick auf ein exaktes Messergebnis vorteilhaft, wenn bedingt durch Materialauswahl und Bauweise ein vordefiniertes Längenausdehnungsverhalten erreichbar ist.

Die Erfindung geht von einem Stand der Technik aus, wie er beispielsweise in der Gebrauchsmusterschrift DE 298 12 803 U1 offenbart ist. Dort ist eine Maßverkörperung gezeigt, die eine Magnetspur auf einem Ring aus kunststoffgebundenem Magnetmaterial aufweist.

Ein bekanntes Verfahren zur Herstellung einer Magnetspur auf einem Ring aus kunststoffgebundenem Magnetmaterial ist aus der EP1452871 bekannt. Der Erfindung liegt die Aufgabe zu Grunde ein Verfahren zur Herstellung einer Maßverkörperung zu schaffen, das es ermöglicht eine verbesserte Maßverkörperung zu fertigen. Weiterhin wird erfindungsgemäß eine Maßverkörperung geschaffen, welche sich insbesondere dadurch auszeichnet, dass diese für hohe mechanische Belastungen geeignet ist und / oder leicht ist.

Diese Aufgaben werden durch ein Verfahren zur Herstellung einer Maßverkörperung gemäß dem Anspruch 1 gelöst, sowie durch eine Maßverkörperung gemäß dem Anspruch 8.

Demnach umfasst das erfindungsgemäße Verfahren zur Herstellung einer Maßverkörperung, die zur Abtastung mit einem Magnetfeldsensor geeignet ist, zunächst das Herstellen einer Mischung aus einer aushärtbaren Masse und magnetisierbaren Partikeln, wobei die hergestellte Mischung dementsprechend eine mittlere Partikelkonzentration aufweist. Diese fließfähige Mischung wird in eine Form gegeben und die Partikel werden anschließend innerhalb des Aushärtezeitraums der Masse bzw. der Mischung in der Form einer Kraft ausgesetzt. Dies erfolgt in einer Weise, dass die Partikel in eine Schicht der Maßverkörperung wandern und dort nach dem Aushärten in höherer Konzentration als die mittlere Partikelkonzentration der ursprünglichen Mischung vorliegen. Darauffolgend, insbesondere nach dem Aushärten der Masse bzw. Mischung, also insbesondere außerhalb des Aushärtezeitraums wird eine magnetische Teilung durch Magnetisieren der in der Schicht befindlichen Partikel aufgebracht.

Als aushärtbare Masse kann insbesondere ein Polymermaterial, beispielsweise ein Zweikomponenten-Harz (z.B. Harz und Härter), insbesondere auf Basis eines Epoxid-Harzes verwendet werden. Alternativ kann auch ein thermoplastischer Kunststoff als Masse eingesetzt werden, welcher durch Abkühlung in der Form aushärtbar ist.

Die betreffende Form, in welche die Mischung eingefüllt wird, kann insbesondere als Negativform ausgestaltet sein. Das heißt, dass die Form eine negative Kontur der Maßverkörperung als Hohlraum aufweist.

Die mittlere Partikelkonzentration X kann als das Verhältnis des Volumens der Partikel $V_{Partikel}$ zum Gesamtvolumen $V_{Gesamt}$ berechnet werden, wobei das Gesamtvolumen als Summe des Volumens der Masse und des Volumens der Partikel bestimmt werden kann.

$$X = V_{Partikel} / V_{Gesamt} = V_{Partikel} / (V_{Masse} + V_{Partikel})$$

Alternativ zur volumenbezogenen Partikelkonzentration kann die Partikelkonzentration auch auf die entsprechenden Massen bezogen werden, also unter Verwendung von $m_{Partikel}$ und $m_{Gesamt}$ (gemessen in kg oder g).

Die Konzentration in der magnetisierbaren bzw. magnetisierten Schicht kann analog zur mittleren Partikelkonzentration X bestimmt werden, wobei nun als Volumen das Volumen der Schicht L heranzuziehen ist. Üblicherweise ist die magnetische Teilung durch ein periodisches Magnetmuster ausgestaltet mit einem Polabstand, der sich als Abstandsmaß zweier (ungleichnamiger) Pole entlang der bestimmungsgemäßen Abtastrichtung darstellt.

In vorteilhafter Ausgestaltung der Erfindung beträgt die mittlere volumenbezogene Partikelkonzentration der Mischung (also der Ausgangsmischung) zwischen 10% und 40%. Demgegenüber beträgt die Konzentration der Partikel in der Schicht der Maßverkörperung nach dem Aushärten mindestens 50%, insbesondere mindestens 60%, mit Vorteil mindestens 65%.

Gemäß einer Weiterbildung der Erfindung kann die Form innerhalb des Aushärtezeitraums in eine Drehbewegung versetzt werden, so dass die Partikel einer Fliehkraft ausgesetzt werden. Diese Methode ist insbesondere vorteilhaft, wenn die Partikel eine unterschiedliche Dichte, insbesondere größere Dichte aufweisen als die aushärtbare Masse.

Gemäß einer Weiterbildung des Verfahrens werden in die Form zusätzlich zur fließfähigen Mischung auch Fasern gebracht zur späteren mechanischen Verstärkung der Maßverkörperung. Die Partikel werden in der Form derart einer Kraft ausgesetzt, dass die Partikel in die Schicht der Maßverkörperung wandern, wobei die Fasern danach außerhalb der Schicht, also nicht in der Schicht liegend angeordnet sind.

Die Erfindung umfasst auch eine Maßverkörperung selbst, die zur Abtastung mit einem Magnetfeldsensor geeignet ist, wobei die Maßverkörperung aus einer Mischung, die eine ausgehärtete Masse und magnetisierbare Partikel umfasst, hergestellt ist. Zudem weist die Maßverkörperung eine Schicht auf, in der die Partikel in höherer Konzentration als die mittlere Partikelkonzentration bezogen auf die gesamte Mischung vorliegen. Die Partikel sind so magnetisiert, dass die Schicht eine magnetische Teilung aufweist.

Die Partikel können unterschiedliche Durchmesser aufweisen. Insbesondere kann dann die Schicht in einem Randbereich der Maßverkörperung angeordnet sein und diejenigen Partikel mit vergleichsweise kleinerem Durchmesser können zum Rand der Maßverkörperung hin stärker konzentriert sein als zur Mitte hin.

Mit Vorteil weist die Maßverkörperung Fasern zur mechanischen Verstärkung auf. Die Fasern sind außerhalb der magnetisierten Schicht angeordnet, also in Bereichen der Maßverkörperung, die im Wesentlichen frei von Partikeln ist. Bei rotationssymmetrischen Maßverkörperungen liegen die Fasern vorteilhafterweise näher an der (Rotations-) Achse als die magnetisierte Schicht.

Mit Vorteil ist die Schicht in einem Randbereich der Maßverkörperung angeordnet. Die Schicht kann somit einerseits vom Rand bzw. von einer Randoberfläche der Maßverkörperung begrenzt sein.

Weiterhin kann die magnetische Teilung der Maßverkörperung aus abwechselnden magnetischen Nord- und Südpolen mit einem Polabstand gebildet sein und die Stärke der Schicht definitionsgemäß das 0,3-fache bis 20-fache des Polabstands betragen, vorzugsweise das 0,5-fache bis 5-fache des Polabstandes oder das 1- bis 2-fache des Polabstandes. Die Schicht kann für sich genommen eine hohlzylindrische Gestalt aufweisen. Die betreffende magnetisierte Schicht kann eine Stärke von weniger als 2,5 mm haben, insbesondere von weniger als 2 mm mit Vorteil weniger als 1,5 mm. Entsprechend kann das Volumen oder die Masse der Schicht L für sich genommen bestimmt werden.

Mit Vorteil ist die Maßverkörperung so ausgestaltet, dass mit dieser Winkelstellungen messbar sind, so dass eine Winkelskalierung an der Mantelseite der Maßverkörperung angeordnet ist. Alternativ dazu umfasst aber die Erfindung auch eine Maßverkörperung, an deren Stirnseite eine Winkelskalierung angeordnet ist, etwa mit radial ausgerichteten Skalen- bzw. Teilungsstrukturen.

Mit Vorteil kann die Maßverkörperung an einer schnell laufenden Welle einer Werkzeugmaschine zur Messung der Drehstellung der Welle befestigt und verwendet werden. Unter einer schnell laufenden Welle sind Wellen zu verstehen, die sich mit mindestens 10000, insbesondere mindestens 20000, oder mindestens 30000 Umdrehungen pro Minute im Betrieb drehen können. Insbesondere ist es in diesem Zusammenhang vorteilhaft, wenn die Werkzeugmaschine eine spanabhebende Maschine ist, weil derartige Werkzeugmaschinen häufig extrem hohe maximale Drehzahlen der Spindel vorweisen. Entsprechend ist mit Vorteil die Welle, an welcher die Maßverkörperung befestigt ist, an ein spanabhebendes Werkzeug koppelbar.

Vorteilhafte Ausführungsformen können aus den Merkmalen der abhängigen Ansprüche entnommen werden.

Weitere Vorteile, sowie Einzelheiten des erfindungsgemäßen Verfahrens und der erfindungsgemäßen Maßverkörperung ergeben sich aus der nachfolgenden Beschreibung von Ausführungsbeispielen anhand der beiliegenden Figuren.

Es zeigen die

Figur 1     eine Draufsicht auf eine Maßverkörperung gemäß einem ersten Ausführungsbeispiel,

Figur 2     einen Teil-Querschnitt durch einen Randbereich der Maßverkörperung gemäß dem ersten Ausführungsbeispiel,

Figur 3    einen Teil-Längsschnitt durch den Randbereich der Maßverkörperung gemäß dem ersten Ausführungsbeispiel,

Figur 4    ein vergrößertes Detail des Teil-Längsschnitts aus Figur 3,

Figur 5    eine Seitenansicht auf eine Maßverkörperung gemäß einem zweiten Ausführungsbeispiel,

Figur 6    eine perspektivische Ansicht auf eine Maßverkörperung gemäß einem dritten Ausführungsbeispiel.

Die Ausführungsbeispiele betreffen die Herstellung einer Maßverkörperung in Form einer Winkelskalierung oder einer Längenskalierung und eine derartige Maßverkörperung selbst.

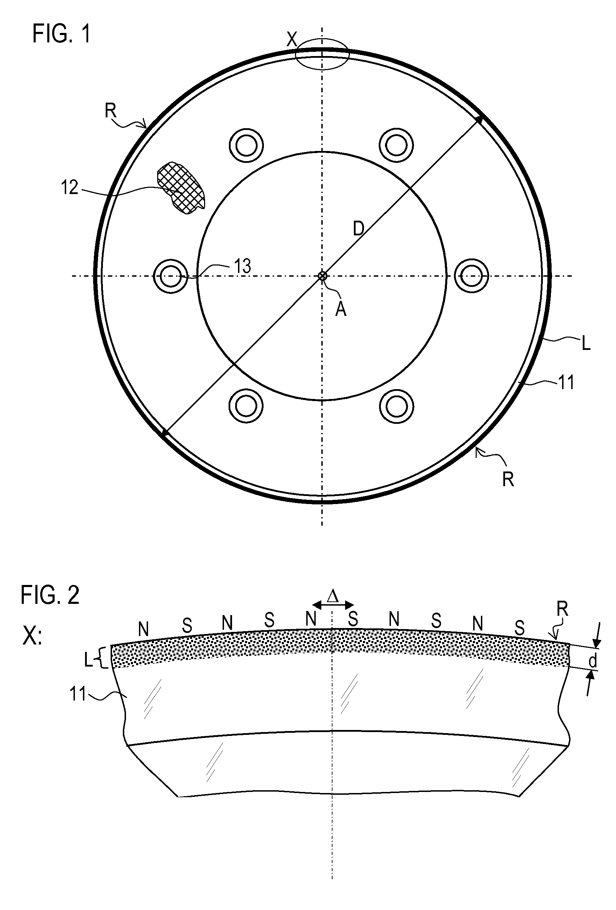

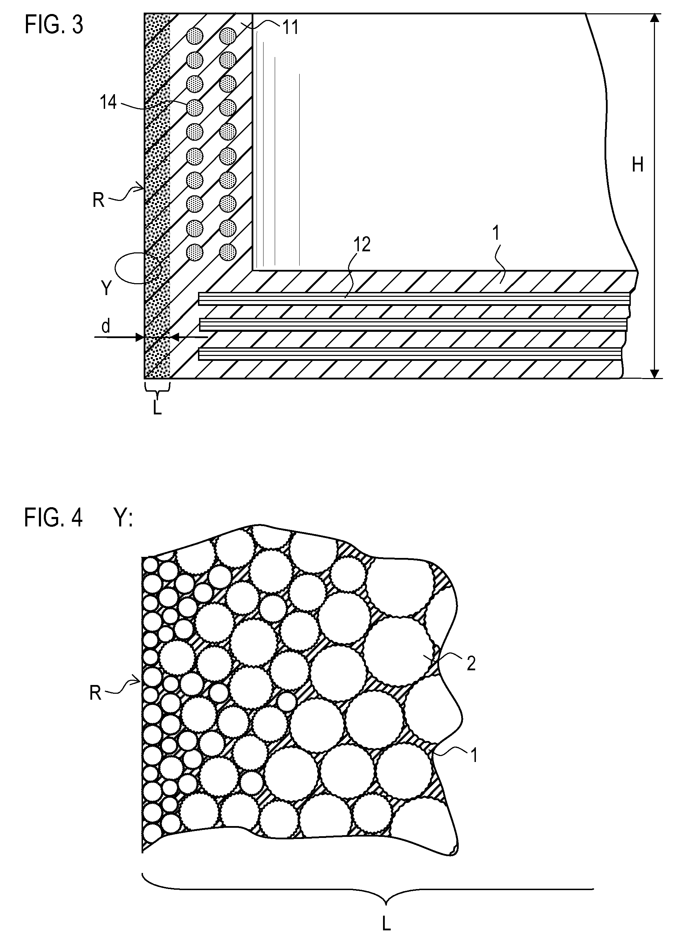

Im Zuge der Herstellung der Maßverkörperung wird zunächst eine Form, hier eine Negativform, bereitgestellt, deren innere Kontur der späteren Außenkontur der Maßverkörperung gemäß der Figur 1 entspricht. Die innere Kontur bzw. die innere Fläche der Form wird mit einem Trennmittel beschichtet. In diese Form werden Metallbuchsen 13 eingesetzt und Gewebematten 12, also Glas- und / oder Karbonfasern, platziert. Ferner können so genannte Rovings 14 (Figur 3), welche unidirektional orientierte Fasern sind, insbesondere in einem umlaufenden Randbereich 11 der herzustellenden Maßverkörperung, angeordnet sein.

Weiterhin wird eine Mischung aus einer aushärtbaren Masse 1 und magnetisierbaren Partikeln 2 hergestellt. Als aushärtbare Masse 1 wird im vorgestellten Ausführungsbeispiel eine Epoxid-Masse verwendet. Der Masse 1 werden Partikel 2, z. B. in Form von Hartferritpulver, beigemischt. Die Partikel 2 weisen unterschiedliche Korngrößen auf. Die Mischung ist zunächst weitgehend homogen, das heißt die Partikel 2 sind in der flüssigen Masse gleichmäßig verteilt, wobei die Mischung eine mittlere Partikelkonzentration X (Volumen aller Partikel bezogen auf das Gesamtvolumen der Mischung, also $X = V_{Partikel} / V_{Gesamt} = V_{Partikel} / (V_{Masse} + V_{Partikel})$) aufweist. Im vorgestellten Ausführungsbeispiel liegt die mittlere volumenbezogene Partikelkonzentration X bei 23 %.

Die so hergestellte Mischung wird nun in die Form, in welcher sich bereits die Gewebematten 12, Metallbuchsen 13 und Rovings 14 befinden, eingefüllt. Nach dem Befüllen und Schließen der Form wird diese umgehend aber jedenfalls noch innerhalb des Aushärtezeitraums in eine Drehbewegung um eine Achse A versetzt, die senkrecht zur Zeichenebene der Figur 1 angeordnet ist. Dies hat zur Folge, dass die Partikel 2 einer Fliehkraft ausgesetzt werden und auf Grund der im Vergleich zur Masse 1 höheren Dichte radial nach außen in den Randbereich 11 wandern. Wie in den Figuren 3 und 4 dargestellt, reichern sich dort die Partikel 2 insbesondere in einer Schicht L an. Mit fortschreitender Verweilzeit der Mischung in der rotierenden Form wandern besonders die kleinsten Partikel 2 in größerer Anzahl in die unmittelbare Nähe des Randes R, während größere Partikel 2 in der Mehrzahl innerhalb der Schicht L weiter innen verbleiben.

Nachdem die Aushärtezeit verstrichen ist, sind die Partikel 2 fest und unbeweglich in der Masse 1 eingebettet, so dass nunmehr die Drehbewegung abgebrochen und danach die Form entfernt werden kann. Die ringförmige Maßverkörperung weist einen Außendurchmesser D auf und eine Höhe H, wie in den Figuren 1 und 3 gezeigt. Im Randbereich 11 liegen nun die Partikel 2 in der Schicht L in höherer Konzentration, hier etwa 70 %, als die mittlere Partikelkonzentration X der ursprünglichen Mischung vor. Außerhalb der Schicht L sind praktisch keine oder kaum Partikel 2 in der ausgehärteten Masse vorhanden.

Die Schicht L weist für sich genommen, also isoliert betrachtet, eine hohlzylindrische Gestalt auf und hat im vorgestellten Ausführungsbeispiel eine radiale Stärke d von etwa 0,5 mm.

Als nächstes kann nun die Schicht L, welche im vorgestellten Ausführungsbeispiel Hartferritpulver in hoher Konzentration umfasst, gemäß der Figur 2 magnetisiert werden. Hierzu wird ein magnetischer Schreibkopf in die Nähe des Randes R gebracht und es wird mit gleichbleibendem Winkelversatz in Umfangsrichtung ein periodisches Magnetmuster aus abwechselnden Nord- und Südpolen aufgebracht, so dass eine Teilung entsteht, welche im gezeigten Ausführungsbeispiel einen Polabstand $\Delta$ (= Abstand zwischen zwei benachbarten Polen) von 400 $\mu$m aufweist. Die betreffende Teilung kann als inkrementale oder absolute Teilung bzw. Codierung ausgestaltet sein und eine oder mehrere Spuren aufweisen. Die Schicht L wird an einer Seite durch den Rand R der Maßverkörperung begrenzt und weist eine Stärke d auf, welche im gezeigten Ausführungsbeispiel 0,5 mm oder 500 $\mu$m beträgt. Somit ergibt sich ein Verhältnis $Q$ = Stärke d zu Polabstand $\Delta$ ($Q = d/\Delta = 500\mu m/400\mu m$) von 1,2. Somit ist im gezeigten Ausführungsbeispiel die Stärke d das 1,2- fache des Polabstands $\Delta$.

Das Volumen $V_L$ der Schicht L kann folgendermaßen berechnet werden:

$$V_L = (D^2 - (D-d)^2)\cdot\pi\cdot H = (D^2 - (D-\Delta/Q)^2)\cdot\pi\cdot H$$

Entsprechend kann somit die Konzentration bezogen auf das Volumen $V_L$ der Partikel in der Schicht L bestimmt werden, wobei die Konzentration der Partikel in der Schicht L vorliegend 70% beträgt.

Eine derartige Maßverkörperung mit der magnetisierten Schicht L, wie sie etwa in der Figur 1 gezeigt ist, kann mit einer Spindel einer Werkzeugmaschine drehfest verbunden werden, während ein Abtastkopf, welcher einen Magnetfeldsensor aufweist, an einem ortsfesten Teil der betreffenden Werkzeugmaschine montiert ist. Der Abtastkopf gibt ein Signal aus, welches abhängig von der Drehstellung der Maßverkörperung ist, die im vorliegenden Beispiel auch als Teilscheibe oder Teilungstrommel bezeichnet werden kann.

Durch die spezielle Bauweise ist die Maßverkörperung für einen Betrieb bei extrem hohen Drehzahlen geeignet. Dies liegt unter anderem daran, dass die tragenden Bereiche der Maßverkörperung parktisch frei von Partikeln 2 sind. Insbesondere werden die Bereiche der Maßverkörperung, in denen Verstärkungen, z.B. in Form der Gewebematten 12 oder der Rovings 14 angeordnet sind nicht durch die Anwesenheit von Partikeln 2 geschwächt. Andererseits ist die magnetisierbare Schicht L vergleichsweise dünn, so dass grundsätzlich die mittlere Partikelkonzentration X vor dem Separieren relativ gering ist bzw. das absolute Volumen aller verwendeten Partikel 2 niedrig ist. Zudem ermöglicht die Masse 1 eine überaus gute Verbindung zur Schicht L.

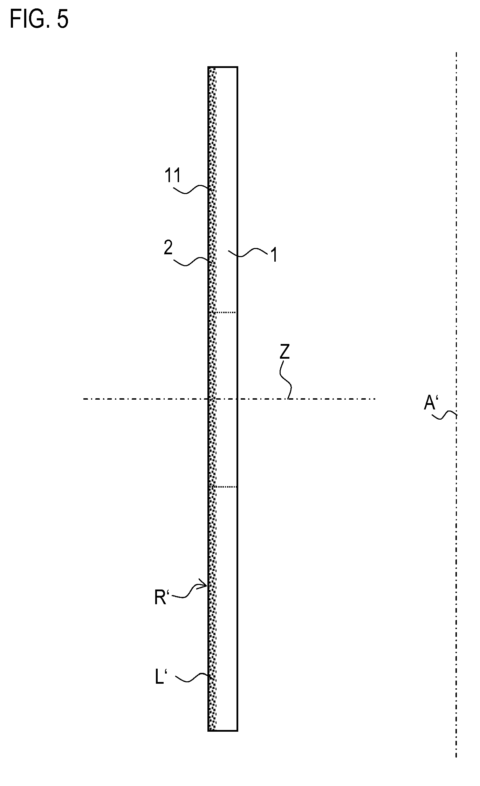

Gemäß einem zweiten Ausführungsbeispiel nach Figur 5 kann die Maßverkörperung als eine ebene ringförmige Scheibe ausgestaltet sein, die an einer Stirnseite eine magnetisierbare Schicht L' aufweist. Auch in diesem Beispiel wurde die Maßverkörperung aus einer Mischung von Partikeln 2 aus Hartferritmaterial und einer aushärtbaren Masse 1 hergestellt. Hier wird die Mischung in einer Form um eine Achse A' gedreht, wobei im Unterschied zum ersten Ausführungsbeispiel die Achse A' orthogonal zu einer Achse Z orientiert ist, um die die Maßverkörperung bestimmungsgemäß im Betrieb rotiert. Somit wandern die Partikel 2 bei der Rotation um die Achse A' zu einem stirnseitigem Rand R' der Maßverkörperung, solange die Masse 1 in der Form noch nicht ausgehärtet ist. Dadurch entsteht die Schicht L', in welcher die Partikel 2 nach dem Aushärten in höherer Konzentration vorliegen als die mittlere Partikelkonzentration X der ursprünglichen Mischung. Durch Magnetisieren der Schicht L' wird danach eine magnetische Teilung hergestellt, die stirnseitig abwechselnd Nord- und Südpole aufweist.

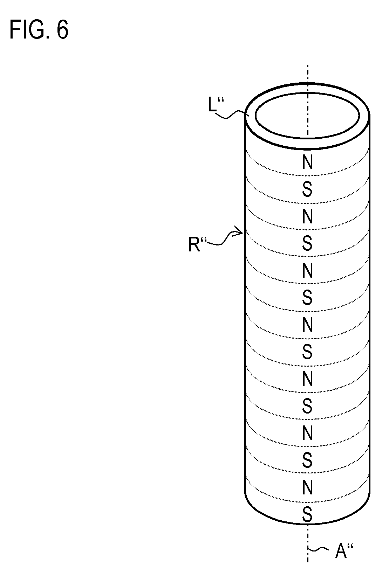

In der Figur 6 ist ein drittes Ausführungsbeispiel gezeigt, bei dem die Maßverkörperung hohlzylindrisch ausgestaltet ist. Die Herstellung der Maßverkörperung im dritten Ausführungsbeispiel erfolgt prinzipiell analog zu den beiden vorhergehenden Ausführungsbeispielen. Die fließfähige Mischung aus einer aushärtbaren Masse 1 und magnetisierbaren Partikeln 2 mit einer mittleren Partikelkonzentration X wird in eine Form eingebracht und während des Aushärtens lässt man die Form mit der Mischung um die Achse A" rotieren. Entsprechend wandern die Partikel 2 nach außen von der Achse A" zum Rand R" hin weg und reichern sich in der mantelseitigen Schicht L" an.

Nachdem die Mischung bzw. die Masse 1 ausgehärtet ist, wird eine magnetische Teilung durch Magnetisieren der in der Schicht L" befindlichen Partikel 2 aufgebracht und zwar in der Weise, dass diese entlang der Achsrichtung abwechselnd Nord- und Südpole aufweist. Eine derartige Maßverkörperung kann in einem Messgerät verwendet werden, durch welches die Weglänge einer linearen Verschiebung längs der Achse A" bestimmbar ist.

**Patentansprüche**

1. Verfahren zur Herstellung einer Maßverkörperung, die zur Abtastung mit einem Magnetfeldsensor geeignet ist, wobei

   - eine Mischung aus einer aushärtbaren Masse (1) und magnetisierbaren Partikeln (2) hergestellt wird, so dass die Mischung eine mittlere Partikelkonzentration (X) aufweist;
   - die Partikel (2) innerhalb des Aushärtezeitraums der Masse (1) in einer Form einer Kraft ausgesetzt werden, in einer Weise, dass die Partikel (2) in eine Schicht (L, L', L") der Maßverkörperung wandern und dort nach dem Aushärten in höherer Konzentration als die mittlere Partikelkonzentration (X) der ursprünglichen Mischung vorliegen;
   - eine magnetische Teilung durch Magnetisieren der in der Schicht (L, L', L") befindlichen Partikel (2) aufgebracht wird.

2. Verfahren gemäß dem Anspruch 1, wobei die Form innerhalb des Aushärtezeitraums in eine Drehbewegung versetzt wird, so dass die Partikel (2) einer Fliehkraft ausgesetzt werden.

3. Verfahren gemäß dem Anspruch 1 oder 2, wobei die Schicht (L, L', L") in einem Randbereich (11) der Maßverkörperung angeordnet ist.

4. Verfahren gemäß einem der vorhergehenden Ansprüche, wobei die Schicht (L, L") für sich genommen eine hohlzylindrische Gestalt aufweist.

5. Verfahren gemäß einem der vorhergehenden Ansprüche, wobei die Schicht (L, L', L") in einer Stärke d von weniger als 2,5 mm hergestellt wird.

**6.** Verfahren gemäß einem der vorhergehenden Ansprüche, wobei die Schicht (L, L', L") in einer Stärke d hergestellt wird und bei der Herstellung der magnetischen Teilung abwechselnd magnetische Nord- und Südpole mit einem Polabstand Δ erzeugt werden, so dass die Stärke d der Schicht (L, L', L") das 0,3-fache bis 20-fache des Polabstands Δ beträgt.

**7.** Verfahren gemäß einem der vorhergehenden Ansprüche, wobei in die Form zudem Fasern (12, 14) gebracht werden zur mechanischen Verstärkung der Maßverkörperung und die Partikel (2) in die Schicht (L, L', L") der Maßverkörperung wandern, so dass die Fasern (12, 14) außerhalb der Schicht (L, L', L") angeordnet sind.

**8.** Maßverkörperung, die zur Abtastung mit einem Magnetfeldsensor geeignet ist, wobei

- die Maßverkörperung aus einer Mischung, die eine ausgehärtete Masse (1) und magnetisierbare Partikel (2) umfasst, hergestellt ist und
- die Maßverkörperung eine Schicht (L, L', L") aufweist, in der die Partikel (2) in höherer Konzentration als die mittlere Partikelkonzentration (X) bezogen auf die gesamte Mischung vorliegen und
- die Partikel (2) so magnetisiert sind, dass die Schicht (L, L', L") eine magnetische Teilung aufweist.

**9.** Maßverkörperung gemäß dem Anspruch 8, wobei die Schicht (L, L', L") in einem Randbereich (11) der Maßverkörperung angeordnet ist.

**10.** Maßverkörperung gemäß dem Anspruch 8 oder 9, wobei die Schicht (L, L") für sich genommen eine hohlzylindrische Gestalt aufweist.

**11.** Maßverkörperung gemäß einem der Ansprüche 8 bis 10, wobei die Schicht (L, L', L") eine Stärke d von weniger als 2,5 mm aufweist.

**12.** Maßverkörperung gemäß einem der Ansprüche 8 bis 11, wobei die Partikel (2) unterschiedliche Durchmesser aufweisen.

**13.** Maßverkörperung gemäß einem der Ansprüche 8 bis 11, wobei die Partikel (2) unterschiedliche Durchmesser aufweisen und die Schicht (L, L', L") in einem Randbereich (11) der Maßverkörperung angeordnet ist und die Partikel (2) mit vergleichsweise kleinerem Durchmesser zum Rand (R, R', R") der Maßverkörperung hin stärker konzentriert sind als zur Mitte hin.

**14.** Maßverkörperung gemäß einem der Ansprüche 8 bis 13, wobei die Maßverkörperung durch Fasern (12, 14) mechanisch verstärkt ist, wobei die Fasern (12, 14) außerhalb der Schicht (L, L', L") angeordnet sind.

**15.** Maßverkörperung gemäß einem der Ansprüche 8 bis 14, wobei die magnetische Teilung aus abwechselnden magnetischen Nord- und Südpolen mit einem Polabstand Δ gebildet ist und die Stärke d der Schicht (L, L', L") das 0,3-fache bis 20-fache des Polabstands Δ beträgt.

**Claims**

**1.** Method for producing a material measure which is suitable to be sensed by a magnetic field sensor, wherein

- a mixture of a the hardenable compound (1) and magnetizable particles (2) is produced, so that the mixture has a mean particle concentration (X);
- within the hardening time period of the compound (1), the particles (2) are subjected to a force in a mould in such a way that the particles (2) migrate into a layer (L, L', L") of the material measure and there, following the hardening, are present in a higher concentration than the mean particle concentration (X) of the original mixture;
- a magnetic graduation is applied by magnetizing the particles (2) located in the layer (L, L', L").

**2.** Method according to Claim 1, wherein the mould is set rotating during the hardening time period, so that the particles (2) are subjected to a centrifugal force.

**3.** Method according to Claim 1 or 2, wherein the layer (L, L', L") is arranged in an edge region (11) of the material measure.

**4.** Method according to one of the preceding claims, wherein the layer (L, L''), considered on its own, has a hollow-cylindrical shape.

**5.** Method according to one of the preceding claims, wherein the layer (L, L', L") is produced with a thickness d of less than 2.5 mm.

**6.** Method according to one of the preceding claims, wherein the layer (L, L', L") is produced with a thickness d and, during the production of the magnetic graduation, magnetic North and South poles are produced alternately with a pole spacing $\Delta$, so that the thickness d of the layer (L, L', L") is 0.3 times to 20 times the pole spacing $\Delta$.

**7.** Method according to one of the preceding claims, wherein fibres (12, 14) are additionally put into the mould for the mechanical reinforcement of the material measure, and the particles (2) migrate into the layer (L, L', L") of the material measure, so that the fibres (12, 14) are arranged outside the layer (L, L', L").

**8.** Material measure which is suitable to be sensed by a magnetic field sensor, wherein

- the material measure is produced from a mixture which comprises a hardened compound (1) and magnetizable particles (2), and
- the material measure has a layer (L, L', L") in which the particles (2) are present in a higher concentration than the mean particle concentration (X), based on the overall mixture, and
- the particles (2) are magnetized in such a way that the layer (L, L', L") has a magnetic graduation.

**9.** Material measure according to Claim 8, wherein the layer (L, L', L") is arranged in an edge region (11) of the material measure.

**10.** Material measure according to Claim 8 or 9, wherein the layer (L, L"), considered on its own, has a hollow-cylindrical shape.

**11.** Material measure according to one of Claims 8 to 10, wherein the layer (L, L', L") has a thickness d of less than 2.5 mm.

**12.** Material measure according to one of Claims 8 to 11, wherein the particles (2) have different diameters.

**13.** Material measure according to one of Claims 8 to 11, wherein the particles (2) have different diameters and the layer (L, L', L") is arranged in an edge region (11) of the material measure, and the particles (2) with a comparatively smaller diameter are concentrated more highly towards the edge (R, R', R") of the material measure than towards the centre.

**14.** Material measure according to one of Claims 8 to 13, wherein the material measure is reinforced mechanically by fibres (12, 14), wherein the fibres (12, 14) are arranged outside the layer (L, L', L").

**15.** Material measure according to one of Claims 8 to 14, wherein the magnetic graduation is formed from alternating magnetic North and South poles with a pole spacing $\Delta$, and the thickness d of the layer (L, L', L") is 0.3 times to 20 times the pole spacing $\Delta$.

**Revendications**

**1.** Procédé de fabrication d'un étalon qui est conçu pour le palpage avec un détecteur de champ magnétique,

- un mélange composé d'une masse durcissable (1) et de particules magnétisables (2) étant produit de telle sorte que le mélange possède une concentration de particules moyenne (X) ;
- les particules (2), au sein de la période de durcissement de la masse (1), sont soumises à une force dans un moule de telle sorte que les particules (2) migrent dans une couche (L, L', L") de l'étalon et, après le durcissement, y sont présentes dans une concentration supérieure à la concentration de particules moyenne (X) du mélange originel ;
- une graduation magnétique est appliquée par magnétisation des particules (2) qui se trouvent dans la couche (L, L', L").

**2.** Procédé selon la revendication 1, le moule étant amené dans un mouvement rotatif pendant la période de durcissement, de sorte que les particules (2) soient soumises à une force centrifuge.

**3.** Procédé selon la revendication 1 ou 2, la couche (L, L', L'') étant disposée dans une zone de bordure (11) de l'étalon.

**4.** Procédé selon l'une des revendications précédentes, la couche (L, L") en elle-même présentant une forme cylindrique creuse.

**5.** Procédé selon l'une des revendications précédentes, la couche (L, L', L") étant fabriquée avec une épaisseur d inférieure à 2,5 mm.

**6.** Procédé selon l'une des revendications précédentes, la couche (L, L', L") étant fabriquée avec une épaisseur d et, lors de la production de la graduation magnétique, des pôles magnétiques nord et sud alternés étant générés avec un espacement polaire $\Delta$, de sorte que l'épaisseur d de la couche (L, L', L") est égale à 0,3 fois à 20 fois l'espacement polaire $\Delta$.

**7.** Procédé selon l'une des revendications précédentes, des fibres (12, 14) destinées au renforcement mécanique de l'étalon étant en outre introduites dans le moule et les particules (2) migrant dans la couche (L, L', L") de l'étalon de telle sorte que les fibres (12, 14) sont disposées à l'extérieur de la couche (L, L', L").

**8.** Étalon qui est conçu pour le palpage avec un détecteur de champ magnétique,

- l'étalon, étant fabriqué à partir d'un mélange composé d'une masse durcissable (1) et de particules magnétisables (2) et
- l'étalon possédant une couche (L, L', L") dans laquelle les particules (2) sont présentes dans une concentration supérieure à la concentration de particules moyenne (X) rapportée au mélange global et
- les particules (2) sont magnétisées de telle sorte que la couche (L, L', L") présente une graduation magnétique.

**9.** Étalon selon la revendication 8, la couche (L, L', L") étant disposée dans une zone de bordure (11) de l'étalon.

**10.** Étalon selon la revendication 8 ou 9, la couche (L, L") en elle-même présentant une forme cylindrique creuse.

**11.** Étalon selon l'une des revendications 8 à 10, la couche (L, L', L'') présentant une épaisseur d inférieure à 2,5 mm.

**12.** Étalon selon l'une des revendications 8 à 11, les particules (2) présentant des diamètres différents.

**13.** Étalon selon l'une des revendications 8 à 11, les particules (2) présentant des diamètres différents et la couche (L, L', L'') étant disposée dans une zone de bordure (11) de l'étalon et les particules (2) ayant un diamètre comparativement plus petit étant plus fortement concentrées en direction du bord (R, R', R") de l'étalon qu'en direction du centre.

**14.** Étalon selon l'une des revendications 8 à 13, l'étalon étant renforcé mécaniquement par des fibres (12, 14), les fibres (12, 14) étant disposées à l'extérieur de la couche (L, L', L").

**15.** Étalon selon l'une des revendications 8 à 14, la graduation magnétique étant formée par des pôles magnétiques nord et sud alternés avec un espacement polaire $\Delta$ et l'épaisseur d de la couche (L, L', L") étant égale à 0,3 fois à 20 fois l'espacement polaire $\Delta$.

FIG. 1

FIG. 2

X:

FIG. 3

14

R

Y

d

L

11

12

1

H

FIG. 4    Y:

R

2

1

L

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29812803 U1

- EP 1452871 A